# EUROPEAN PATENT APPLICATION

(11) **EP 1 335 291 A1**
(43) Date of publication of application: **13.08.2003**
(21) Application number: 02354024.8
(22) Date of filing: 06.02.2002
(51) Int. Cl.: G06F 11/14

(54) **Power management system and method**

(71) Applicant: Hewlett Packard Company, a Delaware Corporation, Palo Alto, CA 94304 (US)
(72) Inventor: Neuman, Paul, 38640 Claix (FR); Vicard, Dominique, 38190 Bernin (FR)
(74) Representative: Lloyd, Richard Graham

(57) **Abstract**

The present invention relates to a power management system and method. The current ACPI specification defines data that should be saved to a non-volatile storage medium to allow recovery from a sleeping state. However, the ACPI specification does not address restoration of the system context following a power failure during a sleeping state. The RAM image includes all applications and data that are currently resident in RAM together with device register values that may be lost during a reduced power consumption state of the computer system. It will be appreciated that it takes a significant amount of time to collate and save the data required to maintain the system context of the client machine. Suitably, the present invention provides for the compression of data representing the system memory context (404) prior to the system memory context data being saved to a non-volatile storage (406) medium. The compression results in fewer bytes needing to be saved to the non-volatile storage medium. This, in turn, saves power since the non-volatile storage medium is operable for a shorter period of time. There are fewer read/write operations and preferably fewer disk-head movement in the case of an HDD.

## Description

### Field of the Invention

The present invention relates to a power management system and method, and, more particularly, to power management of computing systems.

### Background to the invention

The computing industry has developed a common interface for enabling robust operating system directed motherboard system configuration and power management (OSPM) of entire computer systems. The common interface definition and functionality manifests itself in the Advanced Configuration and Power Interface (ACPI) specification. The current version of the ACPI is version 2, having a release date of July 27, 2000, together with the ACPI Errata version 1.3, November 27, 2000, both of which are incorporated herein by reference for all purposes.

The ACPI specification defines a number of operating states for computer systems, such as, for example, desktop, mobile, workstations, servers and laptop computers. Currently, the ACPI specification defines five states, that is, states S0, S1, S2, S3 and S4. Each of the five states represents a different state or degree of power consumption of an associated computer system. State S0 represents the conventional operating state or working state in which the computer system is fully functional and is not in a power saving mode. The remaining states represent the system sleeping states in which the computer system has undertaken steps to reduce power consumption.

Of particular interest are the S3 and S4 states. The ACPI specification defines the behaviour of the S3 state such that less power is consumed within the S3 state as compared to the S2 state. In the S3 state, the processor does not execute instructions and the processor context is not maintained. The dynamic RAM context is maintained and power resources are held in a state that is compatible with the S3 state. Devices associated with the computer system are operable such that they are compatible with the S3 state, that is, only devices that solely reference power resources are in the ON state (all other devices are in the off or D3 state). Devices that are enabled to wake the system, and that can do so from their current state, can initiate a hardware event that causes the system to transition to the S0 state.

The ACPI specification defines the system behaviour in the S4 state as follows. The S4 state is logically lower than the S3 state and is arranged to consume less power than the S3 state. The processor does not execute instructions and the processor context is not maintained. RAM context is not maintained and power resources are in a state that is compatible with the S4 state, that is, all power resources that supply system level power in the S0, S1, S2 or S3 states are in the OFF state. All devices are operable so as to be compatible with the current power resource states; that is, all devices are in the D3 state when the system is in the S4 state.

A system, upon entering the S3 state or in preparation for entering the S3 state, saves, for example, the data necessary for resumption of the normal working state, S0, to RAM. Therefore, it can be appreciated that upon wake-up from the state S3, the data saved to RAM can be accessed and restored relative quickly. Therefore, the S3 sleeping state is known as a low wake-up latency sleep state. However, the S3 state suffers from a major inadequacy in the event of a power failure that adversely affects the RAM such that the content of the RAM is lost. Such a power failure prevents a reliable transition to the working system state, S0, and a re-boot of the computer system may be necessary. It can be appreciated that the data of applications and system context will be lost under such circumstances. Furthermore, a relatively long period of time will elapse during the re-boot before the computer system reaches the working state, S0.

In contrast, the Operating System Directed Power Management software (OSPM) of the system, before entering the S4 state, saves a significant amount of data to a non-volatile storage medium such as, for example, an HDD. Conventionally, data comprising the entire content of the RAM together with device register values are saved to a file, which is stored on the HDD. This data is known as the system memory context.

Upon wake-up from the S4 state, the OSPM of the system is responsible for restoring the system context. Therefore, a system transition from the S4 state to the S0 state involves a significant amount of data recovery. The content of a file, "HIBERFIL.SYS", containing the S4 data, is retrieved from the HDD. This file is used to restore the system context to how it was at the time of entering the state S4. Due to the need to access a relatively slow storage device, system context restoration is a relatively lengthy process. Therefore, the S4 state is considered to be the longest wake-latency sleeping state. Since a non-volatile storage medium is used to store the recovery data, the S4 system state will allow recovery from a power failure. However, the time taken to effect such a recovery is unacceptably long.

Still further, since the RAM can, in some systems, be as large as 128MB or greater, it will be appreciated that a significant amount of time will be taken to save the RAM image, that is, system memory context, to the HDD. Furthermore, as the resident RAM of a machine increases, the amount of power required to save that RAM image to the HDD or to read the RAM image from the HDD also increases. If the file containing the RAM image is fragmented, this will lead to further delays in reading the file from or writing the file to the HDD. Also, the number of disk head seek movements is relatively high when accessing a fragmented file.

It is an object of the present invention at least to mitigate some of the problems of the prior art.

### Summary of the Invention

Accordingly, a first aspect of the present invention provides a method for power management of a system, having a system context, comprising a first storage medium having a current system memory context, which includes data relating to the system context, and a second non-volatile storage medium; the first and second storage media having first and second data access times respectively such that the first data access time is less than the second data access time; the system being operable in a plurality of states, each state having an associated level of system power consumption; the method comprising the steps of: compressing data representing at least a portion of the current system memory context and outputting the compressed data for storage on the second storage medium to allow a transition to a first state of the plurality of states from a second state of the plurality of states; and placing the system in the second state; restoring the system context from the current system memory context stored within the first storage medium in response to detection of an event while the system is in the second state or, in the event that insufficient power was available to the system to maintain the second state, recovering the compressed data from the second storage medium; decompressing the recovered data and restoring the system memory context using the decompressed data.

Advantageously, embodiments of the present invention enable a power management system to be realised in which the amount of data that needs to be saved to preserve a system context is reduced as compared to the prior art.

Preferred embodiments restore the system context once the system memory context has been restored in response to detecting an appropriate event. The appropriate event may be, for example, detection of the actuation of an input device by the user.

Furthermore, embodiments allow, in the absence of a power failure, a relatively fast wake-up time from a sleep state.

A second aspect of the present invention provides a system, capable of having a system context, comprising a first storage medium having a current system memory context, which includes data relating to the system context, and a second non-volatile storage medium; the first and second storage media having first and second data access times respectively such that the first data access time is less than the second data access time; the system being operable in a plurality of states, each state having an associated level of system power consumption; the system further comprising: a codec to compress data representing at least a portion of the current system memory context; means to output the compressed data for storage on the second storage medium to allow a transition to a first state of the plurality of states from a second state of the plurality of states; and means to place the system in the second state; means to restore the system context from the current system memory context stored within the first storage medium in response to detection of an event while the system is in the second state or, in the event that insufficient power was available to the system to maintain the second state, means to recover the compressed data from the second storage medium; and means to restore the system memory context having decompressed the recovered compressed data using the codec.

Preferably, the first state is a working state in which the power consumption of the system is greater than that of the second state.

### Brief Description of the Drawings

Embodiments of the present invention will now be described, by way of example only, with reference to the accompanying drawings in which:
figure 1 shows schematically a power management environment according to an embodiment;
figure 2 illustrates schematically ACPI states and state transitions for a known power management system;
figure 3 depicts states and associated state transitions of a power management system according to a first embodiment;
figure 4 shows a flowchart of a power-off or sleep process according to an embodiment;
figure 5 shows an embodiment of parallel compression and storage of the data representing the system memory context; and
figure 6 depicts a flowchart of a recovery process to restore the system memory context following a power failure that occurred during a reduced power consumption state according to an embodiment.

### Description of the Preferred Embodiments

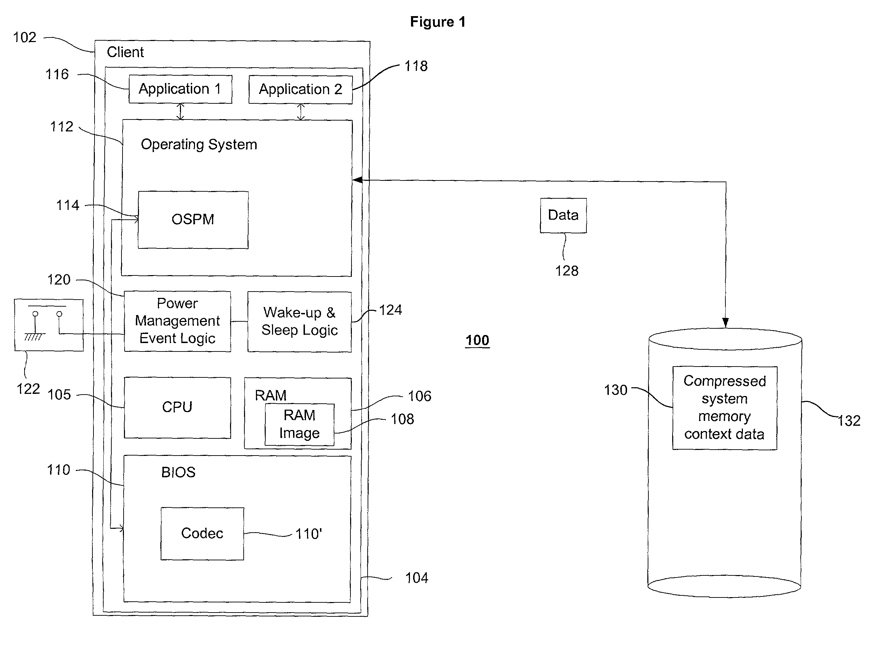

Figure 1 illustrates schematically a power management environment 100 within which ACPI specification power management can be realised. The power management environment 100 comprises a client machine 102 having a system context 104, a processor 105 and a RAM 106 having a RAM image 108. The RAM image 108 comprises the content of the RAM 106. In preparation for entering a reduced power consumption state, in which some or all of the devices (not shown) of the client machine 102 may be powered-down or placed in a reduced power consumption state, the device register values are transferred from the devices into RAM 106 to form part of the RAM image 108. The device register values that are saved to RAM 106 are those values that would be lost in a reduced power consumption state. The RAM image 108, together with the device register values, are known as the system memory context.

The client machine has a boot-time routine 110 that supports ACPI routines. For example, the client machine may have an ACPI compliant BIOS. The client machine has an operating system 112, which is arranged to implement operating system directed power management (OSPM) using OSPM software 114. The client machine may run various applications 116 and 118. The boot-time routine 110 comprises a codec 110' for compressing and decompressing data. The codec 110' may be realised in the form of a software codec, a hardware codec, which may form part of the CPU or which may be a dedicated DSP, or a combination of both hardware and software.

Additional hardware and software functionality is provided in the form of power management event detection logic 120, which detects events in response to which the current power state of the client machine may change to another state. For example, the user may depress an ON button 122, in which case the client machine may effect a transition from a current sleeping state to a working state. Alternatively, the user may instigate a software shutdown of the client machine 102 in response to which the OSPM software 114 may effect a transition from the current state to a sleeping state.

The events that the power management event detection logic 120 may detect also include, for example, modem or other communication device related events, which signal to the power management event detection logic 120 that data is being received and the modem or communication device and the RAM should be suitably powered-up to allow reception of the data. The power management event detection logic 120 forwards notification of detected events to the wake-up and sleep logic 124. The wake-up and sleep logic 124, in conjunction with the OSPM software 114, manages the preservation of the system memory context of the client machine 102. This, in turn, preserves the system context of the client machine 102.

The data representing the system memory context is compressed using the codec 110'. The compressed data 130 is stored on a non-volatile storage medium 132 such as, for example, an HDD. The compressed data 130 can be retrieved in response to a request from the client machine 102. Once the requested data has been retrieved from the HDD 132, the data is decompressed using the codec 110'. The OSPM software 114 uses the decompressed data to restore or establish the system memory context, which, in turn, can be used to restore the system context 104 of the client machine 102.

In preferred embodiments, the compressed data 130 may be a concatenation of a number of blocks of the data 128, each of which represents a compressed portion of the system memory context. Alternatively, the data 130 may represent the whole of the system memory context that was compressed as a single block.

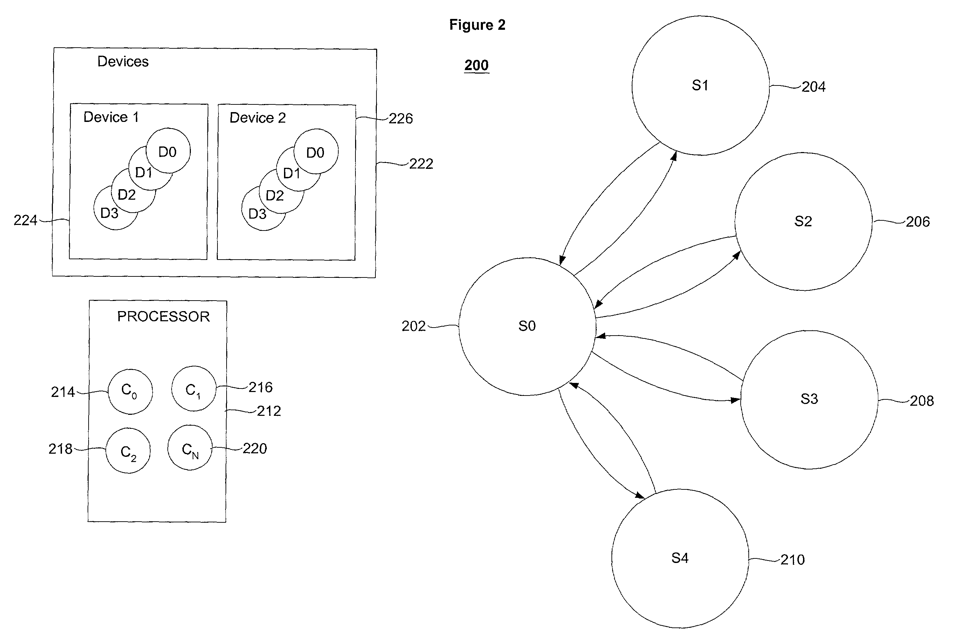

Referring to figure 2, there is shown a state diagram 200 of known power management states. The state diagram has five states, that is, states S0 202, S1 204, S2 206, S3 208 and S4 210. The five states are briefly described below.

State S0: While a client machine is in state S0, the client machine 102 is said to be in a working state. The behaviour of that state is defined such that a processor 212, or, in a multi-processor system, the processors are, in one of a number of so-called processor states, C₀ 214, C₁ 216, C₂ 218,..., C_{N} 220, which each represent varying degrees of processor operation and associated power consumption. The processor maintains the dynamic RAM context. The operating system software 112 individually manages any devices 222, such as first 224 and second 226 devices, connected to, or forming part of, the client machine. The devices can be in any one of four possible device states D0-D3, which, again, reflect varying degrees of power consumption. Any associated power resources are arranged to be in a state that is compatible with the device states.

State S1: The S1 state 204 is a low wake-up latency sleeping state. In this state, no system context is lost (CPU or chip set) and the system hardware of the client machine maintains all system context.

State S2: The S2 state 206 is also considered to be a low wake-up latency sleeping state. The S2 state 206 is substantially similar to the S1 state 204 but for the CPU and the system cache context being lost in the S2 state, since, typically, the operating system is responsible for maintaining cache and processor context.

State S3: The S3 state 208 is a low wake-up latency sleeping state where all system context is lost but for system memory context. The CPU, cache and chip set context are lost in this state. However, the system hardware maintains memory context and restores some CPU and L2 configuration context. The S3 state 208 was described greater in detail above.

State S4: The S4 state 210 is the lowest power, longest wake-up latency sleeping state supported by ACPI. To reduce power consumption, preferably to a minimum, it is assumed that the hardware platform has powered-off all devices but platform context is maintained. The S4 state 210 has been described in greater detail above.

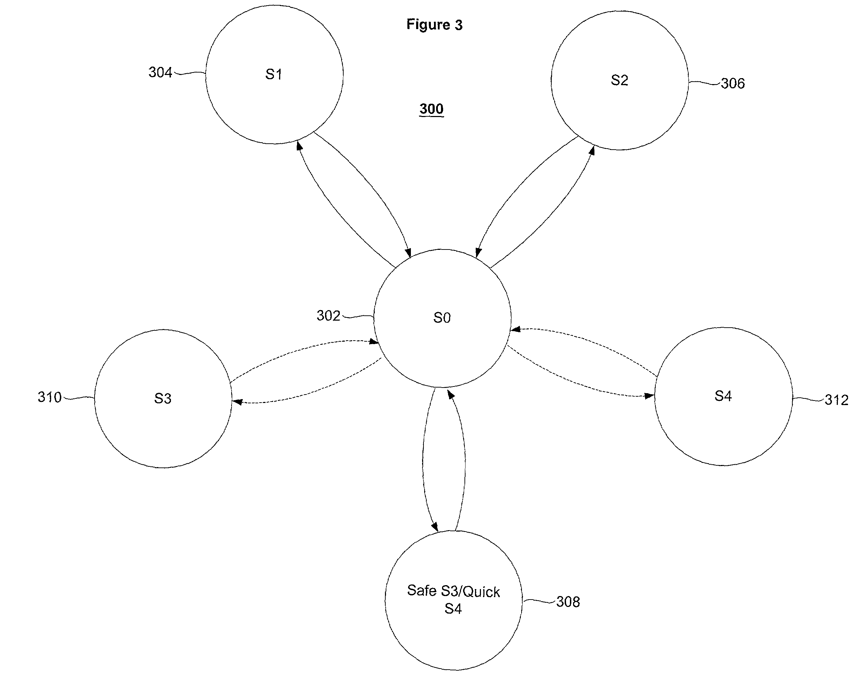

Figure 3 shows a state transition diagram 300 for a power management system according to an embodiment. It can be seen that the state transition diagram 300 comprises a working system state S0 302. Preferably, conventional states S1 304 and S2 306 are also supported. The states S0-S2, in preferred embodiments, are substantially identical in operation and realisation to the corresponding states described above in relation to figure 2 and as defined in current ACPI specifications.

Additionally, the state diagram 300 illustrates a new state, that is, a Safe S3/Quick S4 state 308 (SS3/QS4). The behaviour of the client machine 102 in the SS3/QS4 can be characterised by the actions of saving, in a compressed form, substantially the same data, or at least a portion of that data, to the non-volatile storage medium 132 as that saved in the conventional S4 state while concurrently maintaining in memory the same data as that maintained in the conventional S3 state. Furthermore, in the SS3/QS4 state only the RAM remains in a powered state while all other aspects of the system adopt substantially the same powered state of the conventional S3 state. The compressed data is saved in a file that may be called "SYS_CONTEXT.SYS" or in a dedicated, reserved, storage area of the HDD 132. Alternatively, embodiments may provide a dedicated disk partition (not shown) for storage of the data representing the system memory context. Preferably, such a dedicated partition would not be accessible by the user.

Therefore, if a power failure occurs while the client machine is in the SS3/QS4 state 308, loading and decompressing the SYS_CONTEXT.SYS file can restore the system memory context, which can be used to restore the system context. In contrast to the known power management state S3, if a power failure occurs, the system context at the time of power failure is recoverable.

Compressing the data representing the system memory context also bears the additional benefit that the time taken to retrieve the SYS_CONTEXT.SYS file from the HDD 132 is reduced since the file contains fewer bytes than the system memory context from which it was derived. Having a smaller file to retrieve from the HDD will also result in reduced power consumption when reading the data from the HDD as compared to reading an uncompressed file representing the system memory context. The same applies in respect of writing the compressed data to the HDD 132.

In preferred embodiments, the SYS_CONTEXT.SYS file is arranged to be stored on the HDD 132 in an unfragmented form. When the file is stored in an unfragmented form, the number of disk head seek operations will be reduced as compared to writing or reading a fragmented SYS_CONTEXT.SYS file. This leads to further power saving during the read and write operations. Furthermore, the storage and retrieval of such an unfragmented file will be quicker than the storage and retrieval of a fragmented file containing the data representing the system memory context or the compressed system memory context. This may advantageously reduce the so-called "time to application" constraint that may be imposed by operating system vendors. The "time to application" is the time taken between a user instigating a boot of the client machine or recovery from a sleep state and the operating system having been loaded so that the user can instigate the loading and execution of an application.

It will be appreciated that the type of compression or encoding used will have some bearing upon the degree of data reduction realised. In a simple case, using, for example, run-length encoding, strings of bytes or bits of the same value are replaced, where conducive to data reduction, by a value representing the number of bits or bytes in a string and an indication of the value of the bits or bytes in the string. In the case of compressing bits, it is possible to store an indication of the value of the first bit, that is, a zero or one, followed by successive values representing the number of zeros or ones in successive strings. Each new value represents a toggling between the strings of zeros and ones.

It will be appreciated that the present invention is not limited to any particular type of compression. Embodiments can be realised in which any form of loss-less compression can be used to reduce the amount of data needed to support system context restoration.

It will be appreciated that saving the data to a remotely accessible HDD may be desirable in the case of, for example, a thin client, which uses remotely accessible non-volatile storage. Therefore, the time taken to recover from a power failure when using network drives is reduced as compared to using an uncompressed SYS_CONTEXT.SYS file in such a situation. Still further, the reduced file size will also reduce network traffic when writing or reading the SYS_CONTEXT.SYS file.

In the absence of a power failure, the system context, when waking from the SS3/QS4 state, can be restored within a relatively short period of time. The relatively short period of time may be, for example, 5 seconds, that is, within a time scale that is comparable to the wake-up time for a conventional S3 state. However, the embodiments provide the additional security of also being recoverable from a power failure, unlike the conventional S3 state.

Preferably, once the system context or system memory context has been restored following a power failure, the system enters or resumes the SS3/QS4 state. However, it will be appreciated that embodiments can be realised such that any one of the states could be entered upon recovery.

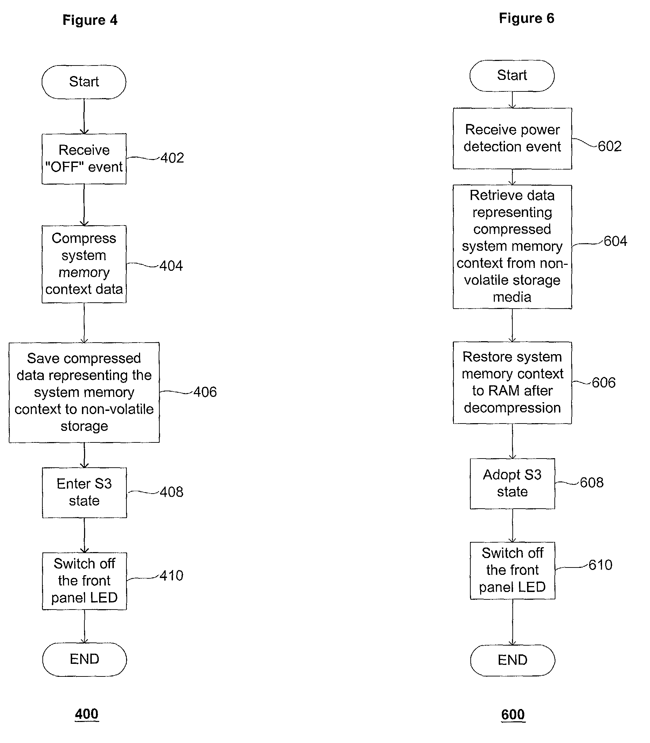

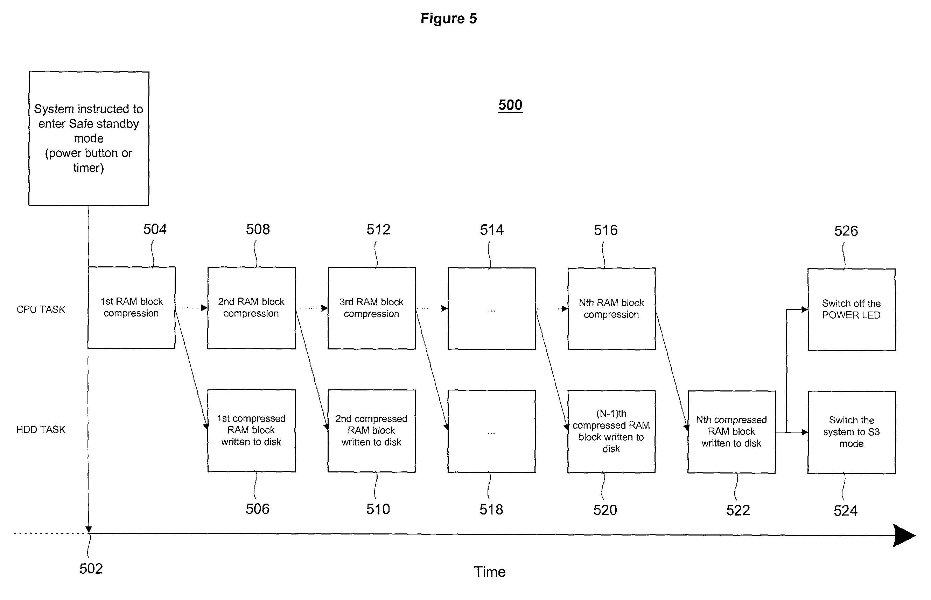

Referring to figure 4, there is shown schematically a flowchart 400 of an OFF process, that is, a process for notionally switching off the client machine that utilises the SS3/QS4 state. Upon detection of a power-off event by the power management event detection logic 120 at step 402, the OSPM software 114, firstly, co-ordinates the compression of the data representing the system memory context, at step 404, and, secondly, saves the compressed system memory context to the HDD 132 in the above mentioned file at step 406. As will be appreciated from figure 5, the compression and storage processes, described in greater details later, are performed in parallel in a pipeline manner according to preferred embodiments. In step 408, the client machine adopts the same power saving configuration as the conventional S3 state. At step 410, the client machine has power for the RAM and the front panel power LED (not shown) is switched off.

Figure 5 shows schematically the processing 500 that is undertaken by the processor 105 and the HDD 132 in preparation for entering the SS3/QS4 state 308. At some point in time 502, the client machine 102 is instructed to enter the reduced power saving state SS3/QS4. The processor 105, using the codec 110', compresses a first block 504 of the RAM image 108. The block of RAM may be any desired size. However, preferred embodiments use 64k blocks of RAM. The first compressed block 506 of the RAM image 108 is output for storage on the HDD 132. While the first compressed block 506 of the RAM image 108 is being written to the HDD 132, the processor 105 fetches and compresses a second 64k block 508 of the RAM image 108. The second compressed block 510 of the RAM image 108 is written to the HDD 132. The remaining blocks 512 to 516 of the RAM image 108 are each compressed in turn and the corresponding compressed blocks 518 to 522 of the RAM image 108 are output to the HDD. This pipeline processing of fetching and compressing blocks of the RAM image 108 and writing the compressed blocks of the RAM image to the HDD 132 is continued until the whole, or at least a portion, of the RAM image 108 has been processed, that is, until the whole or at least useful portions of the RAM image 108 have been saved in a compressed form.

Once the RAM image 108 has been compressed and saved to the HDD 132, the client machine 102 adopts the SS3/QS4 state 308 at time 524. If the client machine comprises a power LED located on the front panel, which is often conventional, to show that the client machine 102 is powered-up when the LED is on and powered-down when the LED is off, the power to the LED is switched-off at 526. Current systems also include a power LED on the motherboard to provide an indication that power is still being supplied to the client machine when the case has been removed. However, the state of such a motherboard LED should not be affected for safety reasons by embodiments of the present invention.

Figure 6 shows a flowchart 600 of a process to recover from a power failure while the client machine 102 was in the SS3/QS4 state. A power return event is detected by the power management event detection logic 120 at step 602 which causes the client machine to retrieve the previously stored data 130 representing the compressed system memory context from the HDD 132 at step 604. The retrieved data 130 is decompressed using the codec 110'. The decompressed data is used to restore the system memory context at step 606. Again, in preferred embodiments, steps 604 and 606 are performed in a pipeline parallel manner, that is, the processing is the converse of that shown in figure 5. At step 608, the power configuration of the client machine 102 is arranged by the OSPM software 114 to adopt substantially the same power configuration as in the conventional S3 state. In step 610, the front panel LED is placed in the off state.

It will be appreciated that the processing for then entering the working state, having restored the client machine to the SS3/QS4 state, is the same as that described with reference to figure 4. This arrangement, that is placing the client machine in a the state that it was in immediately prior to a power failure is convenient for the user. It is also thought that it will be less disconcerting for the user as compared to restoring the client machine to the working system state.

A transition from the conventional S3 state to the working state, that is, state S0, takes approximately 5 seconds as does the transition to the S0 state from the SS3/QS4 state, which are both significantly quicker than the current 20-40 second wake-up time for an S4 to S0 transition. However, the SS3/QS4 state has the additional advantage of allowing a consistent or safe recovery from a power failure while the client machine 102 was in the power saving state SS3/QS4.

Although the above embodiments show a lack of support for S3 and S4 states, it will be appreciated that embodiments can be realised in which the S3 and S4 states are supported in addition to the states described. The states S3 310 and S4 312 are shown in figure 3 as being optionally supported by the dotted line. Furthermore, embodiments can be realised that have only three states, which are the working state, S0, the SS3/QS4 state and a mechanical off state. Alternatively, embodiments can be realised which have only two states; namely, the working state S0 and the SS3/QS4 state.

Furthermore, even though the above embodiments have been described in terms of having a number of system states, the present invention is not limited to such system states. Embodiments can be realised in which other states such as, for example, Legacy states, mechanical-off states G3 and soft-off S5 states are also supported.

Although the above embodiments use an HDD as the non-volatile storage means, it will be appreciated that other forms of non-volatile storage may be used. For example, a flash-memory may be used to store the data to allow recovery from a power failure. Still further, remotely accessible non-volatile storage may be used in addition or instead of the locally accessible HDD for storing the compressed data representing the system memory context.

It will be appreciated that the decision to save the data representing the system memory context in compressed or uncompressed form may be influenced by the anticipated time taken to perform the compression and subsequent decompression. Within embodiments, it may be more effective, in some circumstances, to store the data representing the system memory context in native form. Such circumstances include, for example, a situation in which the system memory context data is relatively small and the compression and decompression times would increase, rather than decrease, the time taken to store and recover the data representing the system memory context.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A method for power management of a system, having a system context, comprising a first storage medium having a current system memory context, which includes data relating to the system context, and a second non-volatile storage medium; the first and second storage media having first and second data access times respectively such that the first data access time is less than the second data access time; the system being operable in a plurality of states, each state having an associated level of system power consumption; the method comprising the steps of: compressing data representing at least a portion of the current system memory context and outputting the compressed data for storage on the second storage medium to allow a transition to a first state of the plurality of states from a second state of the plurality of states; and placing the system in the second state; restoring the system context from the current system memory context stored within the first storage medium in response to detection of an event while the system is in the second state or, in the event that insufficient power was available to the system to maintain the second state, recovering the compressed data from the second storage medium; decompressing the recovered data and restoring the system memory context using the decompressed data.

2. A method as claimed in claim 1, further comprising the step of entering, after restoring the system memory context, a selectable one of the plurality of states.

3. A method as claimed in either of claims 1 and 2, further comprising the step of entering, after restoring the system memory context, the second state of the plurality of states.

4. A method as claimed in either of claims 1 and 2, further comprising the step of entering, after restoring the system memory context, the first state of the plurality of states.

5. A method as claimed in any preceding claim, in which the step of outputting the compressed data comprises the step of saving the whole of the compressed data in contiguous data storage locations of the second non-volatile storage medium.

6. A system, capable of having a system context, comprising a first storage medium having a current system memory context, which includes data relating to the system context, and a second non-volatile storage medium; the first and second storage media having first and second data access times respectively such that the first data access time is less than the second data access time; the system being operable in a plurality of states, each state having an associated level of system power consumption; the system further comprising: a codec to compress data representing at least a portion of the current system memory context and means to output the compressed data for storage on the second storage medium to allow a transition to a first state of the plurality of states from a second state of the plurality of states; and a means to place the system in the second state; means to restore the system context from the current system memory context stored within the first storage medium in response to detection of an event while the system is in the second state or, in the event that insufficient power was available to the system to maintain the second state, means to recover the compressed data from the second storage medium; and means to restore the system memory context having decompressed the recovered compressed data using the codec.

7. A system as claimed in claim 6, further comprising means to enter, after restoring the system memory context, a selectable one of the plurality of states.

8. A system as claimed in either of claims 6 and 7, further comprising means to enter, after restoring the system memory context, the second state of the plurality of states.

9. A system as claimed in either of claims 6 and 7, further comprising means for entering, after restoring the system memory context, the first state of the plurality of states.

10. A system as claimed in any of claims 6 to 9, in which the means to output the compressed data comprises means to save the whole of the compressed data in contiguous data storage locations of the second non-volatile storage medium.

11. A computer program element for implementing a method as claimed in any of claims 1 to 5 or a system as claimed in any of claims 6 to 10.

12. A computer program product comprising a computer readable storage medium having stored thereon a computer program element as claimed in claim 11.
